# DEMANDE DE BREVET EUROPEEN

(11) **EP 1 040 969 A1**
(43) Date de publication de la demande: **04.10.2000**
(21) Numéro de dépôt: 00400786.0
(22) Date de dépôt: 22.03.2000
(51) Int. Cl.: B60R 19/24

(54) **Pare-chocs de véhicule automobile à fixation rapide**

(30) Priorité: 01.04.1999 FR 9904069
(71) Demandeur: Matra Automobile, 75016 Paris (FR)
(72) Inventeur: Oudet, Jean-Louis, 94480 Ablon sur Seine (FR)
(74) Mandataire: David, Alain

(57) **Abrégé**

Pare-chocs de véhicule automobile comportant une partie frontale fixée de façon solidaire à une première partie en regard de carrosserie d'un véhicule automobile et deux parties de retour latérales (242) disposées de part et d'autre de cette partie frontale, caractérisé en ce que lesdites parties de retour latérales sont fixées de façon amovible sur une seconde partie en regard de carrosserie du véhicule automobile (18). Cette fixation amovible est obtenue au moyen de protubérances multiples (44, 46, 48, 50), de type crochets ou spirales, montées sur des bandes support (40, 42, 52, 54) fixées d'une part à la partie de retour latérale (242) et d'autre part à la seconde partie en regard de carrosserie du véhicule automobile (18). Application aux boucliers avant et arrière de véhicules automobiles.

## Description

La présente invention se rapporte au domaine général de l'automobile et elle concerne plus particulièrement les pare-chocs ou boucliers de véhicules automobiles.

### Art antérieur

On sait que de tels dispositifs de protection sont fixés à la carrosserie du véhicule par l'intermédiaire de fixations rigides qui permettent sa tenue dans des conditions normales d'utilisation notamment sous l'effet du vent, des pluies et de la boue. Malheureusement, en cas de chocs, même à faible vitesse (de l'ordre de 4 à 8 km/h par exemple), la rigidité de ces fixations entraîne très souvent des déformations voire des cassures de ces dispositifs dont le coût de réparation peut alors être très important (dans le cas d'utilisation de matériaux composites notamment)

### Objet et définition de l'invention

La présente invention se propose donc de pallier ces inconvénients avec un pare-chocs pour véhicule automobile qui réponde mieux aux exigences de la pratique que ceux actuellement connus et notamment qui ne nécessite pas son changement ou le recours systématique à un carrossier en cas de chocs à faible vitesse.

Dans ce but, l'invention propose un pare-chocs pour véhicule automobile comportant une partie frontale fixée de façon solidaire à une première partie en regard de carrosserie d'un véhicule automobile et deux parties de retour latérales disposées de part et d'autre de cette partie frontale, caractérisé en ce que lesdites parties de retour latérales sont fixées de façon amovible sur une seconde partie en regard de carrosserie du véhicule automobile. Cette fixation amovible est obtenue au moyen de protubérances multiples, de type crochets ou spirales, montées sur des bandes support fixées d'une part à la partie de retour latérale et d'autre part à la seconde partie en regard de carrosserie du véhicule automobile.

Par cette structure, le pare-chocs garde sa tenue en utilisation normale, mais, en cas de chocs à faible vitesse, les deux composants de la fixation amovible se désolidarisant (jouant en quelque sorte un rôle de fusible), les parties de retour latérales se détachent alors de la carrosserie sans subir ni cassure ni déformation irréversible. Le remontage du pare-chocs peut dès lors être réalisé directement par le conducteur en effectuant un simple ré-emboîtage des deux composants formant cette fixation amovible.

De préférence, les bandes support sont fixées dans au moins une zone déterminée (mieux en deux zones distinctes, sensiblement à chaque extrémité de la partie de retour latérale) d'une nervure interne de maintien d'une coque formant une surface externe de la partie de retour latérale du pare-chocs.

Avantageusement, la nervure interne comporte des butées de centrage (60) destinées à coopérer avec des moyens de guidage associés de ladite seconde partie en regard de carrosserie, afin d'assurer un positionnement précis du pare-chocs par rapport à la carrosserie. De préférence, la nervure interne comporte en outre au moins un appui destiné à reposer sur des ailes supports solidaires de la seconde partie de carrosserie.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique en perspective de la partie avant d'un véhicule automobile muni d'un pare-chocs selon l'invention,
- la figure 2 est une vue en coupe selon le plan II-II de la figure 1,
- la figure 3 est une vue en coupe d'une partie de retour latérale d'un pare-chocs selon l'invention, et
- la figure 4 est une vue partielle en coupe selon le plan IV-IV de la figure 3.

### Description détaillée d'un mode de réalisation préférentiel

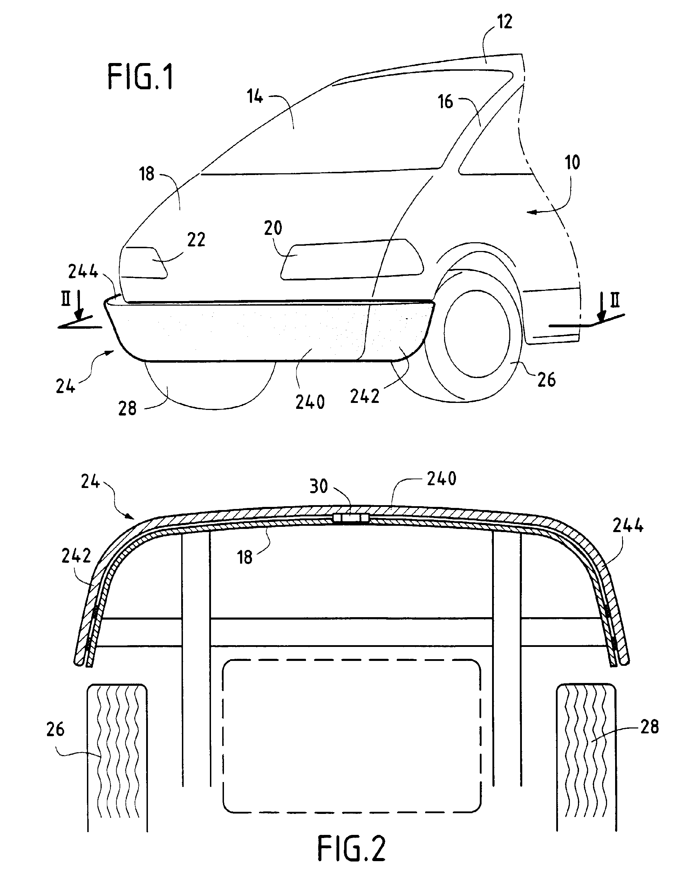

La partie avant d'un véhicule automobile est illustrée en perspective de façon schématique à la figure 1. Ce véhicule comporte une carrosserie 10 dont on peut voir une partie de pavillon 12 qui s'étend jusqu'au pare-brise avant 14 et se poursuit de chaque coté de ce pare-brise par des montants 16 qui descendent jusqu'au plancher de ce véhicule. Sur le capot avant 18, on note la présence de deux projecteurs 20, 22 et d'un pare-chocs (ou bouclier) avant 24 qui comporte une partie frontale 240 fixée de façon solidaire à une partie en regard de la carrosserie (par des moyens de fixation visibles sur la figure 2) et qui se prolonge de chaque coté de cette carrosserie, jusqu'aux roues avant 26, 28, par deux parties de retour latérales 242, 244.

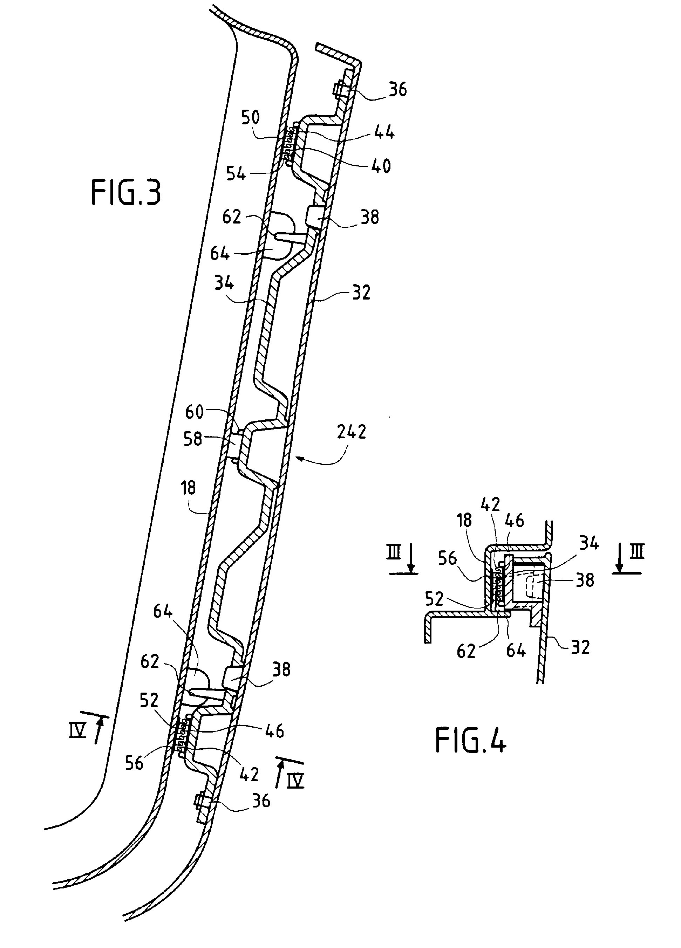

La figure 2 montre plus précisément les différents points de fixation entre la carrosserie, plus précisément sa partie avant 18 et le pare-chocs 24. Ceux-ci sont au moins au nombre de trois ; au moins un (référencé 30) au niveau de la partie frontale 240 du pare-chocs et au moins un (et de préférence deux) au niveau de chaque partie de retour latérales 242, 244. La fixation de la partie frontale est effectuée de façon solidaire par des moyens de fixation conventionnels. Par contre, selon l'invention, les parties de retour latérales sont fixées de façon amovible à la partie de carrosserie en regard. Cette fixation amovible est obtenue par l'emboîtement de protubérances multiples, de type crochets (connus aussi sous l'appellation protégée de Velcro) ou spirales, montées sur des bandes supports fixées de préférence par adhésifs d'une part à une partie de retour latérale 242, 244 et d'autre part à la partie en regard de la partie avant 18 de la carrosserie du véhicule. Ces protubérances multiples sont avantageusement réparties au moins en deux zones distinctes disposées sensiblement à chaque extrémité de la partie de retour latérale 242 ou 244 comme l'illustre la figure 3 qui est une vue en coupe d'une partie de retour latérale (par exemple 242) du pare-chocs 24.

Sur cette figure 3 et sur la figure 4 qui en montre un détail particulier, le pare-chocs est formé d'une paroi ou coque externe 32, en général en matériau composite, qui comporte sur sa surface interne une nervure 34 solidarisée à cette paroi par des fixations mécaniques (par exemple des rivets 36) et positionnée grâce à au moins un plot d'indexage 38 s'étendant depuis la coque externe. Cette nervure interne assure à la fois un renfort et le maintien de la coque et elle s'étend de préférence sur toute la longueur de la partie de retour latérale. Dans au moins une zone déterminée de cette nervure (avantageusement deux zones disposées à chaque extrémité de la partie de retour latérale), des emplacements sont prévus pour recevoir des premières bandes supports 40, 42 portant des premières protubérances multiples 44, 46. Ces premières protubérances multiples montées sur le pare-chocs sont destinées à coopérer avec des secondes protubérances multiples 48, 50 montées sur des secondes bandes supports 52, 54 fixées à la partie avant 18 de carrosserie en regard.

Afin de faciliter un positionnement précis du pare-chocs sur la carrosserie, des moyens de guidage et d'appui sont disposés à la fois sur la carrosserie et sur le pare-chocs. Au moins un plot de guidage 58 est ainsi prévu au niveau de la carrosserie du véhicule 18 pour coopérer avec des butées de centrage correspondantes 60 formées dans la nervure 34. De même, des appuis 62 solidaires de la nervure 34 sont destinés à venir en contact sur des ailes support 64 solidaire de la carrosserie.

Avec la structure de pare-chocs ainsi décrite, le passage chez le carrossier, quasi obligatoire aujourd'hui après un choc à faible vitesse, est évité. En effet, dans ce cas, les protubérances multiples se désolidarisent libérant les deux parties de retour latérales du pare-chocs, lequel muni ainsi d'une certaine liberté de mouvement (la partie frontale du pare-chocs restant fixée à la carrosserie) n'est plus sujet à cassure ou déformation irréversible. Une fois le véhicule immobilisé, le pare-chocs peut être remis en place par un simple ré-emboîtement des parties de retour latérales sur la carrosserie.

En dehors de ces conditions, le pare-chocs conserve bien entendu et malgré tout, ses qualités habituelles de protection notamment en cas de chocs à des vitesses plus élevées.

On notera que si la description précédente s'est référée essentiellement à un pare-chocs avant de véhicule, il est clair que la présente invention peut concerner tout aussi bien un pare-chocs (ou bouclier) arrière, la liaison au véhicule se faisant alors au niveau de sa partie arrière de carrosserie.

## Revendications

1. Pare-chocs de véhicule automobile comportant une partie frontale (240) fixée de façon solidaire à une première partie en regard de carrosserie d'un véhicule automobile (18) et deux parties de retour latérales (242, 244) disposées de part et d'autre de cette partie frontale et fixées de façon amovible sur une seconde partie en regard de carrosserie du véhicule automobile caractérisé en ce que ladite fixation amovible est obtenue au moyen de protubérances multiples (44, 46, 48, 50), de type crochets ou spirales, montées sur des bandes support (40, 42, 52, 54) fixées d'une part à la partie de retour latérale (242) et d'autre part à la seconde partie en regard de carrosserie du véhicule automobile (18).

2. Pare-chocs de véhicule automobile selon la revendication 1, caractérisé en ce que lesdites bandes support sont fixées dans au moins une zone déterminée d'une nervure interne (34) de maintien d'une coque (32) formant une surface externe de la partie de retour latérale (242) du pare-chocs.

3. Pare-chocs de véhicule automobile selon la revendication 2, caractérisé en ce que lesdites bandes support sont fixées en deux zones distinctes, sensiblement à chaque extrémité de la partie de retour latérale.

4. Pare-chocs de véhicule automobile selon la revendication 2, caractérisé en ce que ladite nervure interne comporte des butées de centrage (60) destinées à coopérer avec des plots de guidage associés (58) de ladite seconde partie en regard de carrosserie, afin d'assurer un positionnement précis du pare-chocs par rapport à la carrosserie.

5. Pare-chocs de véhicule automobile selon la revendication 5, caractérisé en ce que ladite nervure interne comporte en outre au moins un appui (62) destiné à reposer sur des ailes supports (64) solidaires de la seconde partie de carrosserie.
